# FASCICULE DE BREVET EUROPEEN

(11) **EP 0 709 653 B1**
(45) Date de publication et mention de la délivrance du brevet: **16.08.2001**
(21) Numéro de dépôt: 95410120.0
(22) Date de dépôt: 24.10.1995
(51) Int. Cl.: G01C 19/56

(54) **Microgyromètre**
Mikrokreisel
Micro gyroscope

(30) Priorité: 28.10.1994 FR 9413146
(43) Date de publication de la demande: 01.05.1996
(73) Titulaire: SEXTANT AVIONIQUE (Société Anonyme), 78141 Velizy Villacoublay (FR)
(72) Inventeur: Fima, Henri, F-26120 Malissard (FR); Pedraza Ramos, Sylvie, F-26000 Valence (FR)
(74) Mandataire: de Beaumont, Michel

(56) Documents cités:
- EP-A- 0 479 686
- DE-A- 4 022 464
- US-A- 5 349 855

## Description

La présente invention concerne le domaine des micro-gyromètres réalisés à partir d'une structure vibrante dans une première direction.

Le document US-A-5 349 555 décrit un microgyromètre pourvu de dents, et de rainures correspondantes, dans une seule direction.

Le principe de base d'un microgyromètre est que, quand une structure vibrante dans une première direction est soumise à une rotation autour d'un axe orthogonal à la direction de vibration, cette structure vibrante tend à développer, sous l'effet de l'accélération de Coriolis, une vibration dans une deuxième direction orthogonale à la première direction de vibration et à la direction de l'axe de rotation. Cette vibration induite a une amplitude proportionnelle à la vitesse de rotation autour de l'axe de rotation.

Il est clair que, pour que la vibration induite soit convenablement détectable, il faut qu'elle ait une amplitude suffisante, c'est-à-dire que la masse mobile en vibration soit suspendue de façon à pouvoir vibrer suffisamment dans son plan dans la première direction et dans la direction orthogonale où est susceptible de se développer la vibration induite. De plus, pour éviter que des vibrations induites n'apparaissent même en l'absence de rotation, il est souhaitable que la fréquence propre de résonance dans la première direction, à laquelle la première vibration est excitée, soit distincte de la fréquence propre de vibration dans la direction orthogonale bien que ces deux fréquences doivent être proches pour que l'on puisse obtenir une vibration induite à la première fréquence dans la deuxième direction quand une rotation apparaît.

Pour le fonctionnement du gyromètre, on est amené à associer à la masse vibrante divers actionneurs et capteurs, de préférence sous forme de condensateurs dont une électrode est formée sur la masse vibrante et une autre sur une surface fixe en regard. En désignant par x la première direction dans laquelle on provoque une vibration et par y la deuxième direction dans laquelle on souhaite détecter une vibration induite, on pourra prévoir :
un premier ensemble de condensateurs dont les armatures sont orientées orthogonalement à la direction x, destinés à entraîner la masse vibrante en vibration à sa fréquence propre, (on pourrait aussi utiliser une excitation piézoélectrique),
un deuxième ensemble de condensateurs dont les armatures sont orientées orthogonalement à la direction x, destinés à détecter et asservir la vibration selon l'axe des x,
un troisième ensemble de condensateurs dont les armatures sont orientées orthogonalement à la direction y, destinés à détecter la vibration induite,
un quatrième ensemble de condensateurs dont les armatures sont orientées orthogonalement à la direction y, destinés à un asservissement et à une annulation d'effet de décalage d'axe, et
un cinquième ensemble de condensateurs dont les armatures sont orientées orthogonalement à la direction y, destinés à assurer une contre-réaction d'élargissement de la bande passante et de stabilisation du gain.

On notera que certains au moins de ces ensembles de condensateurs doivent avoir une surface suffisante ou bien pour assurer une excitation électrostatique suffisamment efficace ou bien pour assurer une détection suffisamment sensible.

Un objet de la présente invention est de prévoir un microgyromètre dont la structure est choisie pour permettre de façon relativement simple de réaliser un décalage souhaité de fréquences de résonance entre les vibrations dans les directions x et y.

Un autre objet de la présente invention est de prévoir un tel microgyromètre qui permette de réaliser simplement les multiples ensembles d'électrodes tels que ceux susmentionnés.

Pour atteindre ces objets, la présente invention prévoit un microgyromètre pour détecter une rotation autour d'une première direction comprenant une plaquette orthogonale à la première direction, suspendue par rapport à un cadre fixe et excitée à sa fréquence de résonance dans une deuxième direction perpendiculaire à la première, une rotation autour de la première direction provoquant une vibration de la plaquette dans une troisième direction orthogonale aux deux premières, dans lequel la plaquette comprend des dents s'étendant respectivement dans les deuxième et troisième directions et s'engageant, sans contact, dans des rainures solidaires du cadre, et chacune des dents porte des métallisations latérales formant des condensateurs avec des métallisations en regard des rainures.

Selon un mode de réalisation de la présente invention, les condensateurs associés aux dents s'étendant dans la troisième direction constituent des premiers condensateurs d'excitation de mise en vibration dans la deuxième direction et des deuxièmes condensateurs de détection et de régulation du mouvement dans la deuxième direction.

Selon un mode de réalisation de la présente invention, les condensateurs associés aux dents s'étendant dans la deuxième direction constituent des troisièmes condensateurs de détection de vibration dans la troisième direction et des quatrièmes condensateurs de correction.

Selon un mode de réalisation de la présente invention, la plaquette vibrante est reliée au cadre par des suspensions constituant des parties étroites de cette plaquette.

Selon un mode de réalisation de la présente invention, les dents et rainures sont formées dans une partie centrale de la plaquette vibrante et dans un socle central solidaire du cadre.

Selon un mode de réalisation de la présente invention, les dents sont formées à la périphérie de la masse mobile et coopèrent avec des rainures formées à la périphérie interne du cadre fixe.

Ces objets, caractéristiques et avantages ainsi que d'autres de la présente invention seront exposés en détail dans la description suivante de modes de réalisation particuliers faite à titre non-limitatif en relation avec les figures jointes par lesquelles :
la figure 1 représente à titre d'exemple une vue de dessus d'un mode de réalisation simplifié d'un microgyromètre selon la présente invention ;
la figure 2 représente à titre d'exemple une vue en coupe d'un mode de réalisation de la structure illustrée en vue de dessus en figure 1 ; et
les figures 3 et 4 représentent deux variantes de réalisation de masse vibrante d'un microgyromètre selon la présente invention.

La présente invention prévoit fondamentalement de réaliser la masse vibrante d'un microgyromètre sous forme d'une plaquette découpée dans une plaque mince d'un matériau tel que du quartz ou du silicium.

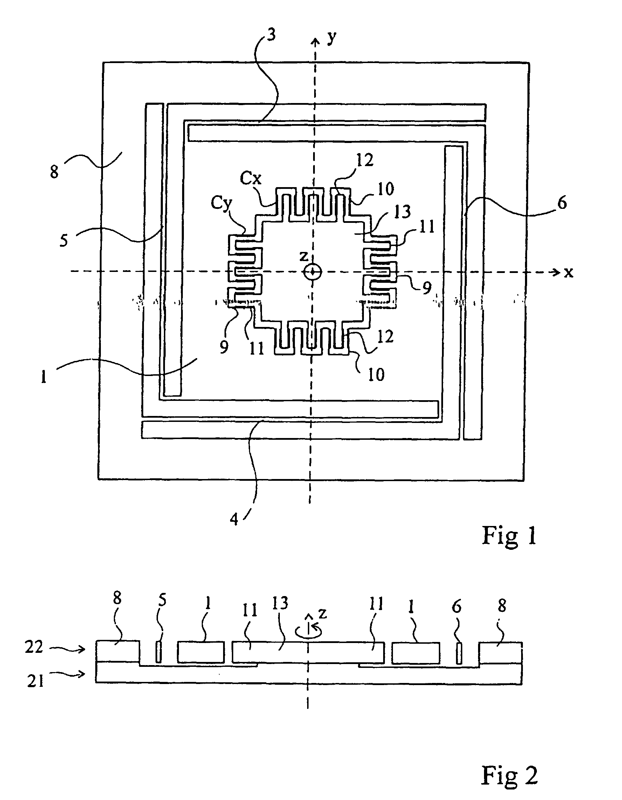

Dans le mode de réalisation de la figure 1, la plaquette vibrante 1 est soutenue par des suspensions orthogonales dont deux, 3 et 4, s'étendent dans la direction x et dont deux, 5 et 6, s'étendent dans la direction y. Ces suspensions relient la masse vibrante 1 à un cadre fixe 8. Les suspensions sont dimensionnées pour présenter une grande souplesse en flexion et être susceptibles de vibrer en traction-compression. Ainsi, quand la masse vibrante est sollicitée dans la direction x, les suspensions 3 et 4 sont excitées en traction-compression et les suspensions 5 et 6 ne gênent pas le mouvement. Inversement, pour les vibrations dans la direction y, ce sont les suspensions 5 et 6 qui seront sollicitées en traction-compression.

La partie centrale de la masse vibrante 1 est munie de rainures et dents 9 s'étendant dans la direction x et de rainures et dents 10 s'étendant dans la direction y. Ces rainures coopèrent avec des rainures et dents respectives 11 et 12 solidaires d'un socle 13 lui-même solidaire du cadre fixe 8. Les faces latérales en regard des rainures et des dents sont munies de métallisations constituant des armatures en regard de condensateurs. On désigne par Cx les condensateurs dont les armatures sont orthogonales à l'axe x et par Cy les condensateurs dont les armatures sont orthogonales à l'axe y. Ainsi, les condensateurs Cx permettront de provoquer ou de détecter un mouvement selon l'axe x et les condensateurs Cy permettront de détecter ou de provoquer un mouvement ou une contre-réaction selon l'axe y.

En pratique, on pourra prévoir un très grand nombre de dents et de rainures dont les dimensions seront aussi faibles que possible. En utilisant des techniques de gravure du type de celles utilisées dans le domaine des semiconducteurs, à partir d'un matériau tel que du quartz, on pourra former des dents ayant par exemple une longueur de l'ordre de 0,5 mm, une largeur de l'ordre de 5 ^{e}m et une hauteur correspondant à l'épaisseur de la plaquette à partir de laquelle la structure est formée, par exemple une épaisseur de 0,3 à 0,5 mm. La distance entre les faces en regard des dents pourra être de l'ordre de quelques micromètres, par exemple 3 à 30 ^{e}m. En retenant l'hypothèse d'une longueur de dents de 0,5 mm et d'une épaisseur de 0,3 mm, on arrive pour chaque surface d'électrode à une dimension de l'ordre de 0,15 mm². Une centaine de dents donneront donc une surface de l'ordre de 15 mm².

On pourra utiliser un grand nombre de dents pour les condensateurs Cx d'excitation de la masse mobile dans la direction x, un nombre plus faible de dents pour les condensateurs Cx de détection et d'asservissement dans la direction x, un grand nombre de dents pour les condensateurs Cy de détection de la vibration induite, et un plus faible nombre de dents pour les condensateurs Cy assurant les diverses autres fonctions évoquées précédemment.

Une telle structure est facilement réalisable avec les techniques connues de microgravure. Elle satisfait à tous les objets recherchés par l'invention puisque les suspensions minces 3, 4, 5, 6 peuvent par exemple avoir des largeurs de l'ordre de 10 ^{e}m et que l'on peut décaler légèrement les fréquences de résonance en chargeant l'une ou l'autre des paires de suspensions par un dépôt de couche mince, par exemple une métallisation, et en réalisant un ajustage par évaporation au laser.

La figure 2 illustre très schématiquement un mode de réalisation particulier d'une structure telle que celle de la figure 1. Ce mode de réalisation implique l'utilisation de deux plaques minces 21 et 22, ayant par exemple une épaisseur de 0,3 à 0,5 mm. Dans la plaque supérieure 22 sont formés tous les éléments que l'on peut voir en vue de dessus en figure 1 et ces éléments sont désignés par les mêmes références. Etant donné que les rainures et les dents complémentaires sont gravées à partir d'une même plaque, on peut obtenir les précisions élevées indiquées précédemment, étant entendu que les parties fixes et mobiles resteront liées jusqu'à une étape suivant immédiatement l'étape d'assemblage avec la plaque inférieure 21. Cette plaque inférieure 21 sert de support au cadre 8 et au socle central 13 de la structure illustrée en figure 1.

L'homme de l'art pourra utiliser de nombreuses techniques connues pour arriver à la structure illustrée. On notera également qu'au lieu de prévoir un assemblage de deux plaques, on peut aussi prévoir l'utilisation de couches sacrificielles pour assurer l'existence d'évidements sous la masse mobile 1. On utilisera par exemple pour former la structure selon la présente invention une couche de silicium mono- ou polycristallin formée sur un substrat de silicium avec interposition d'une couche isolante, par exemple une couche d'oxyde, qui sera gravée localement sous les emplacements où l'on aura formé la masse mobile et les suspensions.

Dans ce qui précède, on a supposé que la masse vibrante 1 entoure un socle central 13 et ceci entraîne certaines difficultés de réalisation.

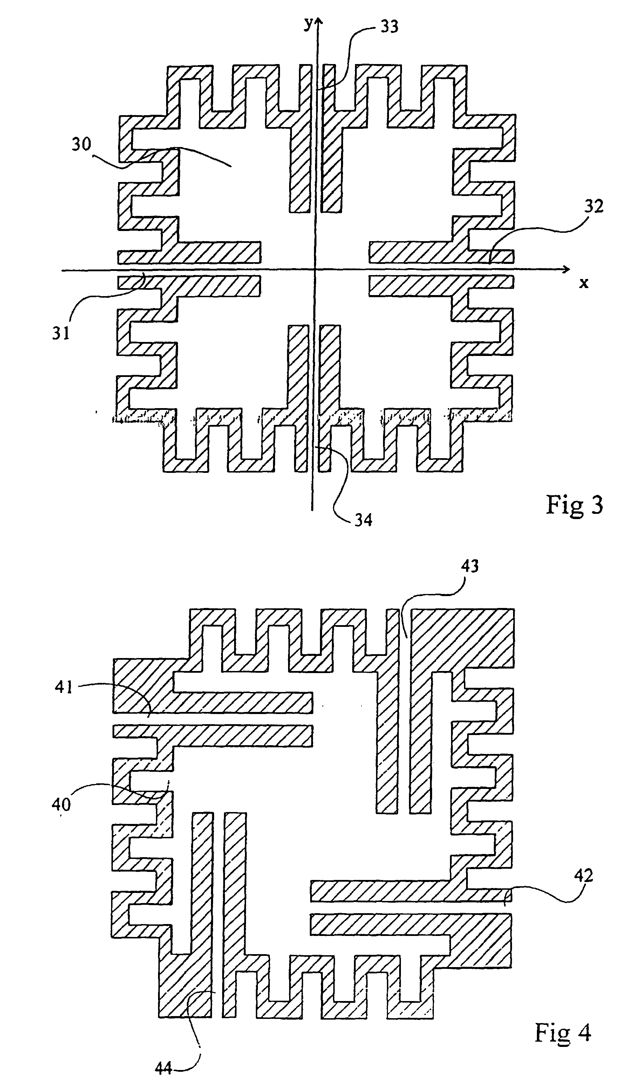

On pourra également, comme le représentent les figures 3 et 4, envisager des modes de réalisation dans lesquels la masse vibrante est disposée complètement à l'intérieur d'un cadre et comprend des dents coopérant avec des rainures formées dans la périphérie du cadre.

En figure 3, la masse mobile est désignée par la référence 30 et les parties hachurées désignent des évidements entre la masse mobile et un cadre fixe qui l'entoure. La masse mobile est reliée au cadre par des suspensions 31, 32 orientées sur l'axe x et 33, 34 orientées selon l'axe y.

Le mode de réalisation de la figure 4 est similaire à celui de la figure 3. Dans ce cas, la masse mobile est reliée au cadre par des suspensions non colinéaires 41,42 et 43,44.

L'homme de métier comprendra que les divers modes de réalisation illustrés peuvent se combiner. Notamment des suspensions décalées peuvent être utilisées dans le cas du mode de réalisation de la figure 1.

A titre d'exemple de dimensions, on pourra prévoir une masse carrée de 4 mm de côté, une largeur de suspensions de l'ordre de 10 ^{e}m, et une longueur de suspension de l'ordre de 5 mm, ce qui donne pour une structure en quartz une fréquence de résonance de l'ordre de 20 kHz. On notera aussi que la structure illustrée permet d'obtenir une fréquence de résonance basse de l'ordre de 1500 Hz selon la direction z pour une épaisseur de substrat de 0,25 mm. En outre, dans cette direction, un amortissement est possible en enfermant la masse mobile dans une enceinte, c'est-à-dire en symétrisant la plaque support 21 illustrée en figure 2 et en remplissant l'ensemble d'air pour prévoir un amortissement qui sera beaucoup plus efficace dans la direction z où la surface est plus grande que dans les directions x et y.

## Revendications

1. Microgyromètre pour détecter une rotation autour d'une première direction (z) comprenant une plaquette (1) orthogonale à la première direction, suspendue par rapport à un cadre fixe (8) et excitée à sa fréquence de résonance dans une deuxième direction (x) perpendiculaire à la première, une rotation autour de la première direction provoquant une vibration de la plaquette dans une troisième direction (y) orthogonale aux deux premières, caractérisé en ce que :
ladite plaquette comprend des dents (9, 10) s'étendant respectivement dans les deuxième et troisième directions et s'engageant, sans contact, dans des rainures (11, 12) solidaires dudit cadre, et
chacune des dents porte des métallisations latérales formant des condensateurs (Cx, Cy) avec des métallisations en regard desdites rainures.

2. Microgyromètre selon la revendication 1, caractérisé en ce que les condensateurs (Cx) associés aux dents s'étendant dans la troisième direction (y) constituent des premiers condensateurs d'excitation de mise en vibration dans la deuxième direction (x) et des deuxièmes condensateurs de détection et de régulation du mouvement dans la deuxième direction.

3. Microgyromètre selon la revendication 1, caractérisé en ce que les condensateurs (Cy) associés aux dents s'étendant dans la deuxième direction (x) constituent des troisièmes condensateurs de détection de vibration dans la troisième direction (y) et des quatrièmes condensateurs de correction.

4. Microgyromètre selon l'une quelconque des revendications 1 à 3, caractérisé en ce que la plaquette vibrante est reliée au cadre par des suspensions (3-6) constituant des parties étroites de cette plaquette.

5. Microgyromètre selon la revendication 1, caractérisé en ce que lesdites dents et rainures sont formées dans une partie centrale de la plaquette vibrante et dans un socle central (13) solidaire dudit cadre (8).

6. Microgyromètre selon la revendication 1, caractérisé en ce que les dents sont formées à la périphérie de la plaquette et coopèrent avec des rainures formées à la périphérie interne du cadre fixe.

## Patentansprüche

1. Mikrokreiselgerät zum Nachweis einer Drehung um eine erste Richtung (z), das Gerät umfassend ein zu der ersten Richtung rechtwinkeliges Plättchen (1), das bezüglich einem festen Rahmen (8) aufgehängt und mit seiner Resonanzfrequenz in einer zur ersten Richtung rechtwinkligen zweiten Richtung (x) angeregt ist, wobei eine Drehung um die erste Richtung eine Schwingung des Plättchens in einer zu den beiden ersten Richtungen rechtwinkligen dritten Richtung (y) hervorruft,
**dadurch gekennzeichnet,**
daß das genannte Plättchen Zähne (9, 10) aufweist, welche sich in der zweiten und dritten Richtung erstrecken und berührungsfrei in mit dem Rahmen fest verbundene Nuten (11, 12) eingreifen, und
daß jeder der Zähne jeweils seitliche Metallisierungen aufweist, welche mit gegenüberliegenden Metallisierungen der Nuten Kondensatoren (Cx, Cy) bilden.

2. Mikrokreisel nach Anspruch 1, dadurch gekennzeichnet, daß die den sich in der dritten Richtung (y) erstreckenden Zähnen zugeordneten Kondensatoren (Cx) erste Kondensatoren zur Schwingungsanregung in der zweiten Richtung (x) und zweite Kondensatoren zum Nachweis und zur Regelung der Bewegung in der zweiten Richtung bilden.

3. Mikrokreisel nach Anspruch 1, dadurch gekennzeichnet, daß die den sich in der zweiten Richtung (x) erstreckenden Zähnen zugeordneten Kondensatoren dritte Kondensatoren zum Schwingungsnachweis in der dritten Richtung (y) sowie vierte Kondensatoren zur Korrektur bilden.

4. Mikrokreisel nach einem der Ansprüche 1 bis drei, dadurch gekennzeichnet, daß das schwingende Plättchen mit dem Rahmen mittels Aufhängungen (3 bis 6) verbunden ist, welche schmale Teile dieses Plättchens bilden.

5. Mikrokreisel nach Anspruch 1, dadurch gekennzeichnet, daß die genannten Zähne und Nuten in einem mittleren Teil des Schwingungsplättchens und in einem mit dem Rahmen (8) fest verbundenen Mittelsockel (13) ausgebildet sind.

6. Mikrokreisel nach Anspruch 1, dadurch gekennzeichnet, daß die Zähne am Umfang des Plättchens ausgebildet sind und mit am Innenumfang des festen Rahmens ausgebildeten Nuten zusammenwirken.

## Claims

1. A microgyrometer for detecting a rotation about a first direction (z) comprising a plate (1) that is orthogonal to the first direction, suspended to a fixed frame (8) and excited at its resonance frequency along a second direction (x) perpendicular to the first direction, a rotation about the first direction causing the plate to vibrate about a third direction (y) orthogonal to the first two directions, characterized in that:
said plate comprises teeth (9, 10) extending respectively along the second and third directions and engaging, without contact, in grooves (11, 12) integral with said frame, and
each tooth carries lateral metallizations which constitute capacitors (Cx, Cy) with facing metallizations of said grooves.

2. The microgyrometer of claim 1, characterized in that said capacitors (Cx) associated with the teeth extending along the third direction (y) constitute first capacitors for exciting in vibration along the second direction (x) and second capacitors for detecting and controlling the motion along the second direction.

3. The microgyrometer of claim 1, characterized in that said capacitors (Cy) associated with the teeth extending along the second direction (x) constitute third capacitors for detecting vibrations along the third direction (y) and fourth correction capacitors.

4. The microgyrometer of any of claims 1 to 3, characterized in that the vibration plate is connected to the frame through suspensions (3-6) which constitute narrow areas of said plate.

5. The microgyrameter of claim 1, characterized in that said teeth and grooves are formed in the central portion of the plate and in a central base (13) integral with said frame (8).

6. The microgyrometer of claim 1, characterized in that the teeth are formed at the periphery of the plate and cooperate with grooves that are formed at the inner periphery of the fixed frame.
